# EUROPÄISCHE PATENTSCHRIFT

(11) **EP 2 558 191 B1**
(45) Veröffentlichungstag und Bekanntmachung des Hinweises auf die Patenterteilung: **29.07.2015**
(21) Anmeldenummer: 11715500.2
(22) Anmeldetag: 15.04.2011
(51) Int. Cl.: B01F 9/00, B01F 9/12, B01F 15/00, B01F 15/02, B65D 88/68, B65D 90/02, B65D 90/62

(54) **MISCHVORRICHTUNG MIT VERSCHLEIßSCHUTZAUSKLEIDUNG**
MIXING DEVICE HAVING A WEAR-RESISTANT LINING
DISPOSITIF MÉLANGEUR À REVÊTEMENT RÉSISTANT À L'USURE

(30) Priorität: 16.04.2010 DE 102010027885
(43) Veröffentlichungstag der Anmeldung: 20.02.2013
(73) Patentinhaber: Maschinenfabrik Gustav Eirich GmbH & Co KG, 74736 Hardheim (DE)
(72) Erfinder: DOERR, Martin, 74731 Walldürn (DE); WÖRNER, Wolfgang, 74746 Höpfingen (DE); GERL, Stefan, 97956 Werbach (DE); SCHMITT, Clemens, 74731 Walldürn-Altheim (DE); WAGNER, Peter, 74736 Hardheim (DE)
(74) Vertreter: WSL Patentanwälte Partnerschaft mbB
(86) Internationale Anmeldenummer: PCT/EP2011/056005
(87) Internationale Veröffentlichungsnummer: WO 2011/128435

(56) Entgegenhaltungen:
- EP-A1- 0 369 149
- EP-A2- 0 204 127
- WO-A1-2010/076120
- DE-A1- 2 454 766
- DE-A1- 10 030 675
- DE-A1-102005 019 010
- DE-U- 7 214 680
- DE-U1- 20 307 420
- JP-A- 8 131 805

## Beschreibung

Die vorliegende Erfindung betrifft eine Mischvorrichtung mit Verschleißschutzauskleidung.

Solche Mischvorrichtungen weisen im Allgemeinen einen um eine Mischerachse drehbaren Behälter zur Aufnahme von Mischgut auf, in dessen Boden eine Entleeröffnung angeordnet ist. In der Regel befindet sich die Entleeröffnung in der Mitte des Bodens. Weiterhin weisen diese Mischvorrichtungen häufig ein im Inneren des Behälters angeordnetes Mischwerkzeug sowie einen Verschlussdeckel zum Verschließen der Entleeröffnung auf. Der-Mischbehälter kann beispielsweise zylindrisch ausgebildet sein.

Ein Mischer mit vertikal ausgerichteten oder leicht gegen die Vertikale geeigneten zylindrischen Mischbehältern werden üblicherweise mit einer verschleißfesten Auskleidung belegt, um den Verschleiß von Mischbehälter und Verschlussdeckel zumindest zu verringern. Hierfür kommen neben kleinformatigen keramischen Kacheln, die auf den Boden und die Wände des Mischbehälters aufgeklebt werden, vor allem großformatige Verschleißschutzplatten aus dickeren, hochverschleißfesten Stahlblechen, Hartguss- oder Hartstahlwerkstoffen bzw. Verschleißbleche mit Hartauftragsschweißung zum Einsatz. Diese Verschleißschutzplatten unterliegen zwar selbst einem Verschleiß, können jedoch leicht ausgetauscht werden, so dass durch die Verwendung von Verschleißschutzplatten die Lebensdauer von Mischbehälter und Verschlussdeckel deutlich verlängert werden kann.

Bei Mischbehältern mit zentral im Behälterboden angeordneter Entleeröffnung werden teilkreisringförmige Verschleißschutzplatten zwischen der Außenkante der Entleeröffnung und der Behälterwand bzw. der daran befestigten Verschleißauskleidung lösbar auf dem Behälterboden befestigt. Auf der Oberfläche des Verschlussdeckels wird ein kreisrunder, den gesamten Querschnitt der Entleeröffnung überdeckender Verschleißschutzdeckel ebenfalls lösbar befestigt, so dass sich bei in die Entleeröffnung eingesetztem Verschlussdeckel im Wesentlichen eine durchgängige, ebene und verschleißgeschützte Fläche bildet, die lediglich durch die sich notwendigerweise zwischen benachbarten Verschleißauskleidungselementen bildenden Spalte unterbrochen wird.

Zur Befestigung der Verschleißschutzplatte werden üblicherweise mehrere kreisrunde Ausnehmungen mit Hilfe eines Plasmaschneiders in die Platten eingebracht, in die dann Gewindebuchsen eingeschweißt werden. Auf diese Weise kann die Befestigung der Verschleißschutzplatten von unten erfolgen. Insbesondere bei hartauftragsgeschweißten Verschleißplatten muss dafür die besonders verschleißresistenten Verschleißschutzschicht im Bereich der Ausnehmung entfernt werden. Jede Gewindebuchse stellt somit einen Angriffspunkt dar für schleißende Feststoffpartikel. Während des Betriebes wird die verschleißresistente Schutzschicht beginnend an den Befestigungspunkten langsam abgeschliffen bis die Verschleißschutzplatten ausgetauscht werden müssen. Jeder Befestigungspunkt führt somit zwangsläufig zu einem erhöhten Verschleiß der Verschleißschutzplatte.

Bei Mischern mit rotierendem Mischbehälter und rotierendem Mischwerkzeug sind im Allgemeinen am Mischwerkzeugboden Messer angeordnet, die sich über die Oberfläche des Behälterbodens bzw. die Verschleißschutzoberfläche bewegen und dadurch den Behälterboden von Materialanhaftungen freihalten. Der äußere Bereich des Behälterbodens zwischen der Behälterwand und dem vom Bodenmesser gerade noch überstrichenen Bereich wird meist über einen von oben vertikal fliegend gehaltenen stationären Bodenabstreifer durch die Drehbewegung des Mischbehälters gereinigt. Die Bodenmesser am Mischwerkzeug sind dabei wie der stationäre Bodenabstreifer so angeordnet, dass sie einen geringen Abstand zur Oberfläche der Verschleißplatten haben und sich stets über den Mittelpunkt des Mischbehälters bewegen und diesen freihalten. Hieraus ergibt sich ein erhöhter Verschleiß im Zentrum der Entleeröffnung, so dass die Verschleißschutzverkleidung auf dem Verschlussdeckel häufiger ausgetauscht werden muss als die teilkreisringförmigen Elementen auf dem Behälterboden. Da die Umfangsgeschwindigkeit der Bodenmesser in der Regel deutlich größer ist als die des drehenden Mischbehälters nimmt der Abtrag der Verschleißschutzschicht während des Betriebes zur Mitte des Mischbehälters hin zu.

Wie beispielsweise in der EP 1 103 492 beschrieben ist, wird der Verschlussdeckel mittels eines Tragarms über eine Kreisbewegung in und aus der Entleeröffnung hinein- bzw. herausgeschwenkt. Damit die Entleeröffnung dicht geschlossen wird und der Verschleißangriff durch das Mischgut an den entstehenden Spalten gering ist, sind möglichst enge Spalten zwischen Mischbehälter einerseits und Verschleißdecke andererseits notwendig. Dadurch gestaltet sich der Austausch des Verschleißdeckels sehr aufwendig. Der Verschleißdeckel weist fertigungstechnisch bedingte Maßtoleranzen auf, so dass die Verschließvorrichtung in horizontaler und vertikaler Richtung durch besonders geschultes Personal zeitaufwendig neu justiert werden muss.

Wird der Verschlussdeckel beim Schließvorgang über eine Kreisbewegung in die Entleeröffnung des drehenden Mischbehälters eingeschwenkt, so wird die Kante des Verschlussdeckels bzw. des daran befestigten Verschleißdeckels an die Unterkante der Entleeröffnung anschlagen. Über eine im Tragarm vorgesehene Kippachse kann dann der Verschlussdeckel geringfügig aus der Kreisbewegung abgelenkt werden, so dass sich der Verschlussdeckel linear in die Entleeröffnung bewegt. Durch die Berührung des Verschlussdeckels mit der diesen umgebenden Entleeröffnung wird sichergestellt, dass die Drehbewegung des Mischbehälters auf den mit einer Lagerung versehenen Verschlussdeckel übertragen wird, so dass sich dieser im geschlossenen Zustand schlupffrei mit dem Mischbehälter mitdreht. Durch das Einhaken des Verschlussdeckels in die Entleeröffnung wird die Innenseite der kreisringförmigen Entleeröffnung mit der Zeit verschlissen und muss ebenfalls getauscht werden. Daher ist es bereits üblich, die Kante der Entleeröffnung, die bei jedem Schließvorgang mit dem Verschlussdeckel in Eingriff tritt, mit einem separaten verschleißgeschützten und austauschbaren Verstärkungsring auszuführen.

In der EP 0 204 127 ist ein druckfester Mischer gezeigt. Die EP 0 369 149 beschreibt eine Rührwerkskugelmühle.

Auch die DE 72 14 680 U und die DE 24 54 766 A1 zeigen mehrteilige Verschleißschutzauskleidungen.

Ausgehend von dem beschriebenen Stand der Technik ist es daher Aufgabe der vorliegenden Erfindung, eine Mischvorrichtung mit einer Verschleißschutzauskleidung bereitzustellen, die weniger stark verschleißt und im Falle eines Verschleißes einfacher und vor allem kostengünstiger ausgetauscht werden kann.

Diese Aufgabe wird durch eine Mischvorrichtung der eingangs genannten Art gelöst, bei der die Verschleißschutzauskleidung aus einem Auskleidungshauptteil und einem Verschleißelement besteht, wobei das Verschleißelement näher an der Behälterachse angeordnet ist als das Auskleidungshauptteil. Erfindungsgemäß wird daher die Verschleißschutzauskleidung in ein während des Betriebes stärker beanspruchtes Element, das sogenannte Verschleißelement, und ein im Betrieb weniger stark beanspruchtes Element, das Auskleidungshauptteil, aufgeteilt. In der Regel muss dann, wenn die Verschleißschutzauskleidung selbst Verschleißerscheinungen zeigt, lediglich das Verschleißelement, nicht jedoch das Auskleidungshauptteil ausgetauscht werden.

Des Weiteren ist erfindungsgemäß vorgesehen, dass das Auskleidungshauptteil mindestens zwei, vorzugsweise mindestens drei auf einem Lochkreis angeordnete Befestigungsbohrungen aufweist, das Auskleidungshauptteil eine Ausnehmung zur Aufnahme des Verschleißelementes besitzt, das Verschteißelement mindestens eine, vorzugsweise mindestens drei Befestigungsbohrungen aufweist, wobei die Befestigungsbohrungen des Verschleißelementes bei in die Ausnehmung eingesetzten Verschleißelemente auf dem Lochkreis angeordnet sind.

Durch die beschriebene Maßnahme ist es möglich, die erfindungsgemäße mehrteilige Verschleißschutzauskleidung bei bereits bestehenden Mischvorrichtungen zu verwenden, ohne dass neue Bohrungen in den Behälterboden eingebracht werden müssen. Zudem ist der Lochkreis bei den bestehenden Mischvorrichtungen im Allgemeinen derart positioniert, dass an den Befestigungsstellen eine optimale Befestigung der Verschleißschutzauskleidung möglich ist. Daher ist in der bevorzugten Ausführungsform vorgesehen, exakt die gleichen Befestigungspunkte zu verwenden. Zudem hat die Verwendung der üblichen Befestigungspunkte den Vorteil, dass die Anzahl der Befestigungsbohrungen für das Verschleißelement nicht erhöht werden muss, d.h. die Anzahl an erhöhtem Verschleiß ausgesetzten Punkte wird nicht erhöht.

In einer weiteren bevorzugten Ausführungsform ist vorgesehen, dass das Verschleißelement an seiner dem Auskleidungshauptteil zugewandten Seite zumindest abschnittsweise konkav ausgebildet ist, das Auskleidungshauptteil an seiner dem Verschleißelement zugewandten Seite zumindest abschnittsweise konvex ausgebildet ist, wobei der konkave Abschnitt des Verschleißelementes und der konvexe Abschnitt es Auskleidungshauptteils korrespondierend zueinander ausgebildet sind. Diese Maßnahme ist insbesondere dann von Vorteil, wenn Verschleißelement und Auskleidungshauptteil auf demselben Lochkreis befestigt werden, da dann diese Maßnahme dafür sorgt, dass die von dem Verschleißelement abgedeckte Fläche verringert wird, so dass die Kosten für die Herstellung des Verschleißelementes verringert werden.

In einer weiteren bevorzugten Ausführungsform ist vorgesehen, dass das Auskleidungshauptteil und das Verschleißteil an den aneinander zugewandten Kanten zumindest abschnittsweise überlappen, wobei vorzugsweise die Kanten derart ausgebildet sind, dass das Auskleidungshauptteil und -verschleißteil im Wesentlichen bündig aneinander grenzen. So ist es beispielsweise möglich, dass die Kanten konisch zulaufen oder gestuft ausgebildet sind, so dass beide Kanten ineinander greifen, ohne dass die im Wesentlichen ebene Fläche, die durch die Verschleißschutzauskleidung gebildet wird, unterbrochen wird.

Dadurch, dass eines der Teile an der Kante das andere Teil überlappt, wird eine zusätzliche Halterung für das Teil zur Verfügung gestellt, dessen Kanten von der Kante des anderen Teils überdeckt wird. Durch diese Maßnahme können Befestigungsbohrungen eingespart werden, was wiederum die Lebensdauer der Verschleißschutzauskleidung erhöht, da, wie eingangs bereits erläutert, jede Befestigungsbohrung einen Punkt mit erhöhtem Verschleiß darstellt.

Dabei sind die Kanten mit Vorteil derart ausgeführt, dass die Kante des Verschleißelementes die Kante des Auskleidungselementes überragt, so dass das Auskleidungshauptteil von dem Verschleißelement gehalten wird. In einer alternativen Ausführungsform können die beiden Kanten auch in Art einer Nut und Federverbindung ausgebildet sein.

In einer weiteren bevorzugten Ausführungsform ist der Behälterboden an der dem Behälterinneren zugewandten Seite mit einer Verschleißschutzauskleidung bestückt, die aus dem Auskleidungshauptteil und dem Verschleißelement besteht, wobei das Verschleißelement an seiner der Entleeröffnung zugewandten Seite stufig ausgebildet ist, so dass das Verschleißelement zumindest abschnittsweise den inneren Rand der Entleeröffnung abdeckt.

Wie bereits eingangs ausgeführt wurde, dient der innere Rand der Entleeröffnung bei einigen Mischvorrichtungen zugleich als Anschlag und Führung für den auf einen Tragarm gehaltenen Verschlussdeckel. Folglich ist der innere Rand der Entleeröffnung erhöhtem Verschleiß ausgesetzt. Dadurch, dass das Verschleißelement stufig ausgebildet ist, so dass es auch den inneren Rand der Entleeröffnung zumindest teilweise abdeckt, sind keine weiteren Maßnahmen zum Schutz des inneren Randes der Entleeröffnung notwendig.

Alternativ oder in Kombination dazu kann der Verschlussdeckel an der dem Behälter inneren zugewandten Seite mit einer Verschleißschutzauskleidung bestückt sein, die aus dem Auskleidungshauptteil und dem Verschleißelement besteht, wobei das Hauptteil an seiner dem Verschlussdeckelrand zugewandten Seite stufig ausgebildet ist, so dass das Auskleidungshauptteil zumindest abschnittsweise den Rand des Verschlussdeckels abdeckt.

Bei dieser Maßnahme kann auch der Rand des Verschlussdeckels geschützt werden, und bei Verschleiß kann das Verschleißteil einfach ausgetauscht werden.

Weiterhin ist es von Vorteil, wenn der Behälterboden an der dem Behälterinneren zugewandten Seite mit einer Verschleißschutzauskleidung bestückt ist, die aus dem Auskleidungshauptteil und dem Verschleißelement besteht und die Behälterwand mit einer Verschleißschutzauskleidung ausgestattet ist, die nicht bis zum Behälterboden reicht, so dass zumindest abschnittsweise zwischen Verschleißschutzauskleidung der Behälterwand und Behälterboden ein Spalt verbleibt, in dem das Auskleidungshauptteil zumindest teilweise hineinragt.

Das Auskleidungshauptteil wird somit zwischen die Verschleißschutzauskleidung der Behälterwand und Behälterboden eingeschoben, so dass die Wandverkleidung das Auskleidungshauptteil im Bereich der Behälterwand hält. Es ist daher nun nur noch notwendig, das Auskleidungshauptteil an der gegenüberliegenden Seite, d.h. der dem Verschleißelement zugewandten Seite zu befestigen. Werden beispielsweise das Verschleißelement und das Auskleidungshauptteil an den zugewandten Kanten entsprechend stufig ausgeführt, wie dies oben beschrieben wurde, so kann auf eine zusätzliche Schraubenbefestigung des Auskleidungshauptteils vollständig verzichtet werden, was die Lebensdauer des Auskleidungshauptteils deutlich erhöht, zumal es ohnehin erfindungsgemäß in einem Bereich angeordnet ist, der nur geringem Verschleiß ausgesetzt ist. Weiterhin ist es möglich, dass die Behälterwand mindestens eine Öffnung aufweist und das Auskleidungshauptteil derart ausgebildet ist, dass es durch die Öffnung in der Behälterwand ragt. Auch durch diese Maßnahme kann das Auskleidungshauptteil im Bereich der Behälterwand befestigt werden.

Da jedoch die Dicke der Verschleißschutzauskleidung gewissen Toleranzen unterliegt, ist eine optimale Dimensionierung der Behälterwandöffnung nicht möglich. Wird die Öffnung zu klein gewählt, so kann je nach Herstellungstoleranz der Verschleißschutzauskleidung das Auskleidungshauptteil möglicherweise nicht mehr durch die Öffnung hindurch ragen. Wird dagegen die Öffnung zu groß gewählt, kann die Öffnung bzw. die Behälterwand das Auskleidungshauptteil nicht mehr sicher stützen.

Daher ist in einer bevorzugten Ausführungsform vorgesehen, dass eine Spannvorrichtung außerhalb des Behälters derart angeordnet ist, dass die Spannvorrichtung mit dem durch die Öffnung in der Behälterwand ragenden Abschnitt des Auskleidungshauptteils in Eingriff treten und das Auskleidungshauptteil auf den Behälterboden pressen kann. Bei dieser Ausführungsform kann die Behälterwandöffnung größer ausgebildet sein, da diese nun nicht mehr für das Halten des Auskleidungshauptteiles vorgesehen ist.

Auch das Auskleidungshauptteil kann mehrteilig ausgeführt sein, wobei die Teile des Auskleidungshauptteils in Umfangsrichtung angeordnet sind und vorzugsweise die aneinandergrenzenden Kanten zweier benachbart angeordneter Teile des Ausgangshauptteils nicht exakt radial angeordnet sind. Häufig wird bei den beschriebenen Mischvorrichtungen nämlich ein Bodenabstreifer verwendet, der exakt radial zur Behälterachse angeordnet ist. Wenn auch die Spalte zwischen benachbarten Teilen des Auskleidungshauptteils exakt radial angeordnet sind, führt dies zu periodischen Vergrößerungen des Widerstands, den der Abstreifer überwinden muss, was zu einem höheren Verschleiß des Abstreifers führt. Dadurch, dass die Spalte zwischen aneinandergrenzenden Teilen des Auskleidungshauptteils nicht radial, sondern beispielsweise gewinkelt, oder gerundet verlaufen, können solche periodisch auftretenden Kraftstöße vermieden werden.

Weitere Vorteile, Merkmale und Anwendungsmöglichkeiten der vorliegenden Erfindung werden deutlich anhand der folgenden Beschreibung bevorzugter Ausführungsformen sowie der zugehörigen Figuren. Es zeigen:
- Figur 1: eine Draufsicht auf einen Mischbehälter des Standes der Technik,
- Figur 2: eine Schnittansicht eines Mischbehälters des Standes der Technik,
- Figur 3: ein schematisches Verschleißprofil auf dem Behälterboden bei Ausführungsformen des Standes der Technik,
- Figur 4: eine Detailansicht einer Ecke eines Mischbehälters gemäß des Standes der Technik,
- Figur 5: eine erste Ausführungsform der Erfindung,
- Figur 6: eine Detailansicht der Figur 5 entlang der Schnittlinie A-A',
- Figur 7: eine zweite Ausführungsform der Erfindung,
- Figur 8: eine dritte Ausführungsform der Erfindung,
- Figur 9: eine Detailansicht der Figur 8 entlang der Schnittlinie B-B',
- Figur 10: eine vierte Ausführungsform der Erfindung,

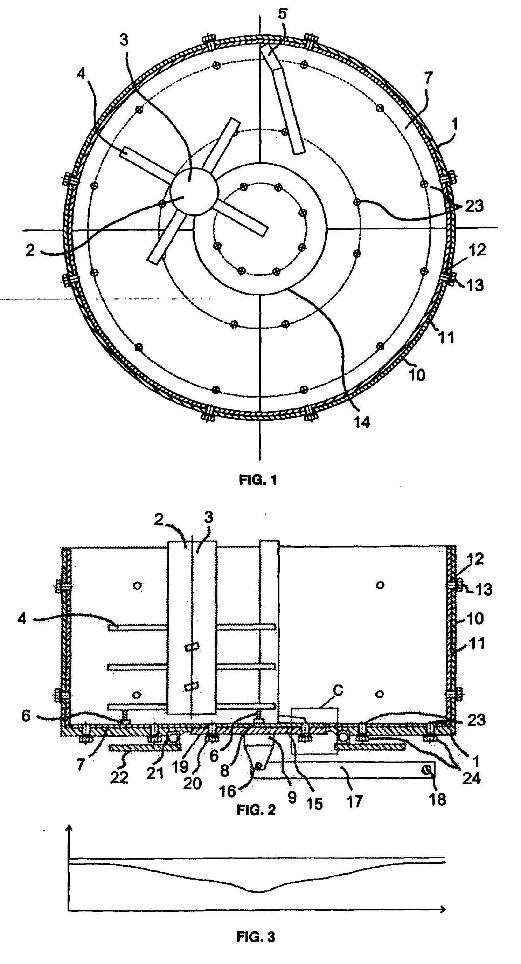

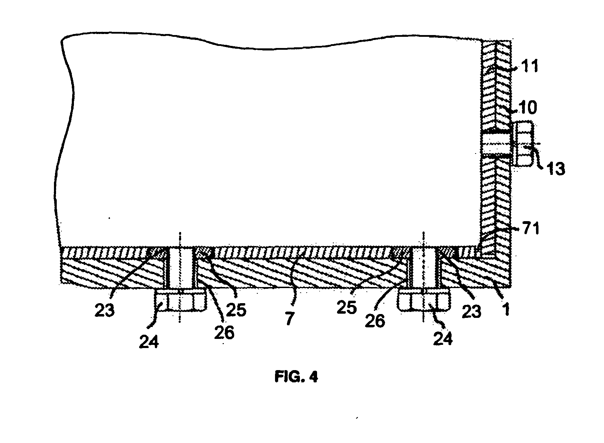

Figur 1 zeigt einen Mischbehälter mit Verschleißschutzauskleidung in einer Draufsicht, wie er aus dem Stand der Technik bekannt ist. Figur 2 zeigt eine Schnittansicht und Figur 4 eine Detailvergrößerung.

Der zylindrische Mischbehälter 1 weist ein exzentrisch im Mischbehälter angeordnetes, fliegend gelagertes Mischwerkzeug 2 an einer zentralen Welle 3 mit seitlich angeordneten Mischflügeln 4 sowie einen stationären, vertikal von oben fliegend gehaltenen Wand-/Bodenabstreifer 5 auf. An der untersten Flügelebene des Mischwerkzeugs 2 sind vertikal nach unten ragende Bodenmesser 6 befestigt, die mit einem geringen Abstand zur Oberfläche der Verschleißplatte 7 bzw. dem Verschleißdeckel 8 der Verschließvorrichtung 9 arbeiten. Auf der Innenwand 10 des Behälters 1 sind gebogene Verschleißflächen 11 mit eingearbeiteten Gewindebohrungen 12 über Schrauben 13 lösbar befestigt.

Im Zentrum des Mischbehälters 1 befindet sich die Entleeröffnung 14. Die Entleeröffnung 14 kann mit dem auf der Verschließvorrichtung 9 montierten Verschlussdeckel 15 verschlossen werden. Der Verschlussdeckel 15 ist über eine Lagergabel und den Lagerzapfen 16 mit einem Tragarm 17 verbunden und somit um die Kippachse des Lagerzapfens 16 schwenkbar. Der Tragarm 17 ist über die Schwenkwelle 18 drehbar gelagert. Ein nicht dargestelltes Rückstellelement sorgt dafür, dass ohne äußere Krafteinwirkungen der Verschlussdeckel 15 relativ zu dem Tragarm 17 eine bestimmte Position einnimmt.

Auf der Oberseite des Verschlussdeckels 15 ist ein einteiliger kreisrunder Verschleißdeckel 8 mit mindestens drei auf mindestens einem Lochkreis angeordneten Gewindebohrungen 19 mittels Schrauben 20 lösbar verbunden.

Auf dem Behälterboden sind Verschleißplatten 7 als Ringsegmente ausgeführt. Zwischen Verschleißdeckel 8 einerseits und Innenkante der Verschleißplatten 7 andererseits ergibt sich ein kleiner Ringspalt. Die teilringförmigen Verschleißplatten 7 sind ähnlich wie der Verschleißdeckel 8 mit eingearbeiteten Gewindebohrungen 23, welche auf einem inneren und einem äußeren Lochkreis liegen, versehen und werden von unten über Schrauben 24 lösbar befestigt. Die radial äußere Kante der Verschleißplatte 7 hat einen kleineren Radius als der Innenradius der an der Behälterwand 10 befestigten Verschleißfläche 11. Der Mischbehälter 1 ist über eine Drehverbindung 21 drehbar auf dem Maschinenrahmen 22 gelagert und wird über einen Antrieb (nicht dargestellt) in Rotation versetzt.

In Figur 3 ist schematisch ein Verschleißprofil über dem Durchmesser des Behälters dargestellt.

Man erkennt, dass der Verschleiß im Zentrum des Behälters am größten ist und abnimmt, je weiter man sich nach außen bewegt. Während im radial äußeren Bereich des Mischbehälters 1 der Verschleiß durch die Drehbewegung in Verbindung mit dem stationären Wand-/Bodenabstreifer 5 mehr oder weniger gleichförmig ist, nimmt der Verschleiß zur Behälfermitte hin fortlaufend zu. Der höchste Verschleiß wird dann im Zentrum der Entleeröffnung 14 beobachtet.

Figur 4 zeigt eine Detailansicht einer Ecke des Mischbehälters aus Figur 1 und 2. Auf dem Boden des Mischbehälters 1 sind die teilringförmigen Verschleißplatten 7 aufgelegt. In den Verschleißplatten sind Ausnehmungen 25 eingebracht, in die Inlays mit Gewindebohrungen 23 eingeschweißt werden. Die Verschleißplatten 7 werden von unten durch Bohrungen 26 im Mischbehälter 1 mittels Schrauben 24 über die Gewindebohrungen 23 befestigt. Die Wandverschleißbleche 11 sind auf ähnliche Weise an der Mischbehälterwand 10 befestigt. Die Wandverschleißbleche 11 reichen dabei vom Behälterboden bis nahezu an die obere Kante des Mischbehälters 1. Zwischen Verschleißplatten 7 und Wandverschleißblech ergibt sich aus fertigungstechnischen Gründen ein kleiner Spalt 71.

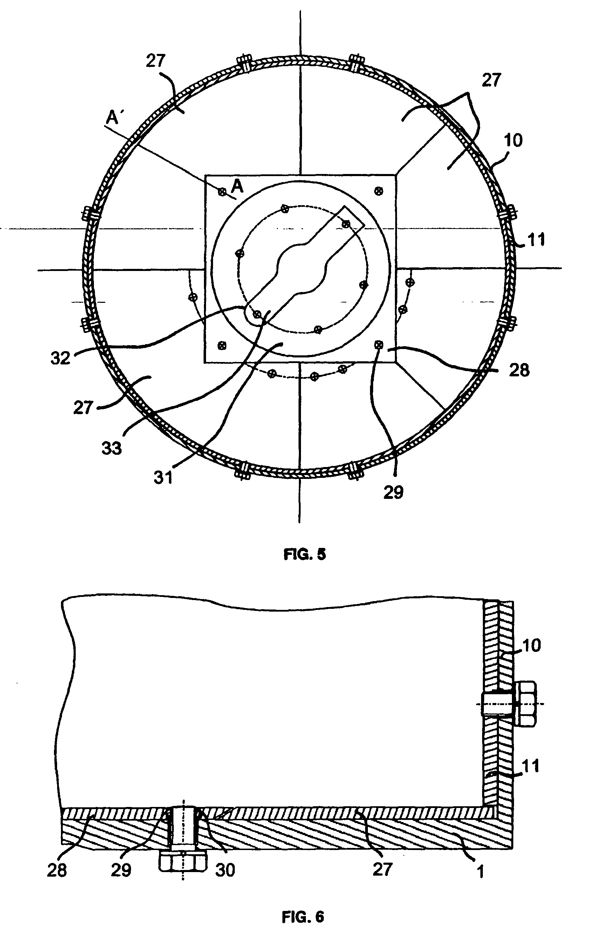

Eine erste Ausführungsform der Erfindung zeigt Figur 5 in einer Draufsicht und Figur 6 in einer Schnittansicht entlang der Linie A-A'.

Hier ist die Behälterwand 10 mit gebogenen und lösbar verbundenen Verschleißflächen 11 der bekannten Art ausgekleidet. Die untere Kante der Verschleißfläche 11 liegt allerdings nicht mehr auf dem Mischbehälterboden auf, sondern ist um mindestens die Höhe der Verschleißplatte 27 oberhalb des Bodens angeordnet. Die Verschleißplatten bestehen hier aus Auskleidungshauptteilen 27 und dem Verschleißelement 28. Das Auskleidungshauptteil 27 besitzt keinerlei Ausnehmung oder Gewindebohrung und ist an der radial inneren Kante abgeschrägt. In gleicher Weise weist das Verschleißelement 28 an seiner radial äußeren Kante eine gegenläufig ausgeführte Kante auf. Das in Figur 5 dargestellte quadratische Verschleißelement 28 ist in den vier Eckbereichen mit mittels Laser geschnittenen Bohrungen 29 versehen, in die Gewindebuchsen 30 rückseitig eingeschweißt werden. Die mittels Laser geschnittenen Bohrungen sind nur geringfügig größer als die Gewindebuchse, so dass sich nur ein ganz geringer Spalt zwischen Befestigungsmittel und Verschleißschutzschicht ergibt. Über von unten durch den Mischbehälterboden eingeführte Schraubverbindungen wird das Verschleißelement 28 auf dem Mischbehälterboden lösbar befestigt und hält über die Abschrägung das Auskleidungshauptteil 27 an deren radial inneren Kante. An der radial äußeren Kante wird das Auskleidungshauptteil 27 unter die untere Kante des Wandverschleißbleches 11 geschoben und von diesem von oben niedergehalten. Alternativ dazu kann das Wandverschleißblech 11 auch nach der Montage des Auskleidungshauptteils 27 in den Mischbehälter eingebracht und an der Behälterwand 10 befestigt werden. Bei Bedarf können zusätzlich punktuell und in ihrer Dicke variable Abstandshalter zwischen der radial äußeren Kante des Auskleidungshauptteils 27 und der inneren Behälterwand 10 eingebracht werden, um eine Bewegung des Auskleidungshauptteils radial nach außen zu verhindern.

In der unteren Hälfte von Figur 5 ist erfindungsgemäß dargestellt, dass die Auskleidungshauptteile im Bereich ihrer radial innen liegenden Kanten mit Hilfe von Bohrungen 34 mit eingeschweißten Gewindebuchsen an der Unterseite des Mischbehälterbodens lösbar mit Schrauben verbunden. In diesem Fall muss die radial außen liegende Kante des Verschleißelementes 28 und die radial innen liegende Kante des Auskleidungshauptteils 27 nicht überlappend ausgeführt sein. Man erkennt, dass die Befestigungsbohrung 29 des Verschleißelementes 28 auf demselben Lochkreis liegt wie die Befestigungsbohrungen des Auskleidungshauptteiles 27. Es ist insbesondere beim Nachrüsten bestehender Mischvorrichtungen durch die erfindungsgemäße Auskleidung von Vorteil, da hier der bereits im Behälterboden vorhandene Lochkreis für die Befestigung von sowohl dem Verschleißelement 28 als auch den Auskleidungshauptteilen 27 verwendet werden kann.

Da sich gezeigt hat, dass im Betrieb der größte Verschleiß der Verschleißschutzauskleidung in der Nähe der Entleeröffnung auftritt, genügt es, bei einer erfindungsgemäße Ausführungsform lediglich das Verschleißelement 28 auszutauschen, während die Auskleidungshauptteile 27 zunächst weiter verwendet werden können. Während bei den Ausführungsformen des Standes der Technik bei jedem Verschleiß die komplette Verschleißschutzauskleidung getauscht werden musste, können erfindungsgemäß die Auskleidungshauptteile 27 zumindest einmal, häufig jedoch mehrere Male wiederverwendet werden, bevor sie ausgetauscht werden müssen.

Auch die Verschleißschutzauskleidung des Verschlussdeckels ist mehrteilig ausgeführt und besteht aus einem Auskleidungshauptteil 31 und einem Verschleißelement 33, wobei das Verschleißelement 33 den inneren Bereich der Verschleißschutzauskleidung des Verschlussdeckels umfasst. Somit ist auch hier der vom Verschleiß am stärksten betroffene Bereich im Zentrum mit einem getrennten Verschleißelement 33 versehen, das im Verschleißfalle getauscht werden kann, während das Auskleidungshauptteil 31 auf dem Verschlussdeckel verbleiben kann. Das hat insbesondere den Vorteil, dass es zu keiner Neujustierung des Tragarms bzw. des Verschließsystems kommt, die bei einem Austausch auch des Auskleidungshauptteiles 31 unumgänglich ist.

In der in Figur 5 gezeigten Ausführungsform ist das Auskleidungshauptteil 31 im Wesentlichen kreisförmig ausgebildet, wobei es einen in der Mitte verbreiterten rechteckigen Ausschnitt 32 aufweist. Der Ausschnitt 32 kann winklige oder abgerundete Ecken aufweisen, wie schematisch dargestellt ist. In den Ausschnitt 32 wird passgenau ein Verschleißelement 33 eingelegt und über zwei in den gegenüberliegenden Endbereichen des Verschleißelementes 33 angeordnete Bohrungen mit Gewinde oder eingeschweißten Gewindebuchsen auf dem Lochkreis des Auskleidungshauptteils 31 über entsprechende Schraubverbindungen lösbar verbunden. Auf diese Art lässt sich der am stärksten vom Verschleiß betroffene innere Bereich 33 der Verschleißschutzauskleidung austauschen, ohne dass der restliche, weniger vom Verschleiß betroffene Bereich 31 ausgetauscht werden muss. Da der Ausschnitt 32 nicht bis an den äußeren Rand des Verschleißdeckels reicht, wird beim Austausch des Innenteils die restliche Schutzverkleidung über die Verschraubungen fest mit der Verschließvorrichtung verbunden bleiben. Somit ist eine Neuausrichtung der Verschließvorrichtung nach dem Austausch des Innenteils nicht mehr notwendig.

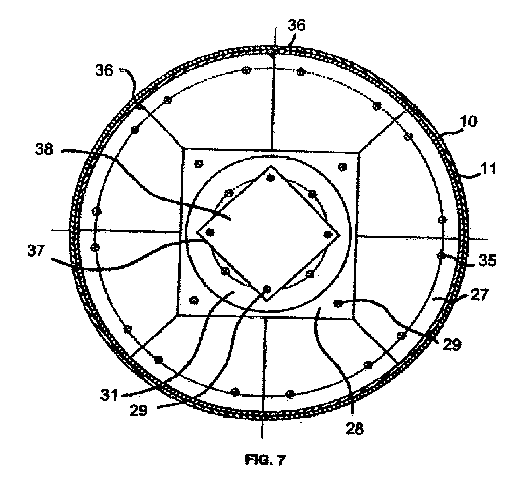

Eine zweite Ausführungsform der Erfindung zeigt die Figur 7. Bei dieser Ausführungsform erfolgt die Befestigung der Auskleidungshauptteile 27 des Behälterbodens an deren radial äußerem Ende über die oben beschriebene, auf einem Lochkreis angeordneten lasergeschnittenen Bohrungen 35 mit eingeschweißter Gewindebuchse durch eine lösbare Verschraubung von unten durch den Mischbehälterboden. Die äußere Kante der Auskleidungshauptteile 27 wird nicht von den Wandverschleißblechen 11 überdeckt und niedergehalten. Zur Demontage der Auskleidungshauptteile sind an den radial außen liegenden Ecken der Ringsegmente Ausnehmungen 36, die z. B. dreiecksförmig sein können, eingebracht, mit deren Hilfe die Auskleidungshauptteile über ein Hebelwerkzeug an der Außenkante hochgedrückt werden können. Auch hier sind die Auskleidungshauptteile 27 an ihrer radial innen liegenden Kante mit einer Abschrägung bzw. Abstufung versehen, so dass sie durch die äußere Kante des Verschleißelementes 28 gehalten werden. Bei dieser Ausführungsform ist das Verschleißelement 38 der Verschleißschutzauskleidung des Verschlussdeckels quadratisch ausgebildet. Das Verschleißelement 38 wird über vier an den äußeren Ecken versehene Bohrungen 29 lösbar mit der Verschließvorrichtung 9 verbunden. Die Bohrungen befinden sich dabei auf dem gleichen Lochkreis wie die Bohrungen zur Befestigung des Auskleidungshauptteils 31 der Verschleißschutzauskleidung des Verschlussdeckels.

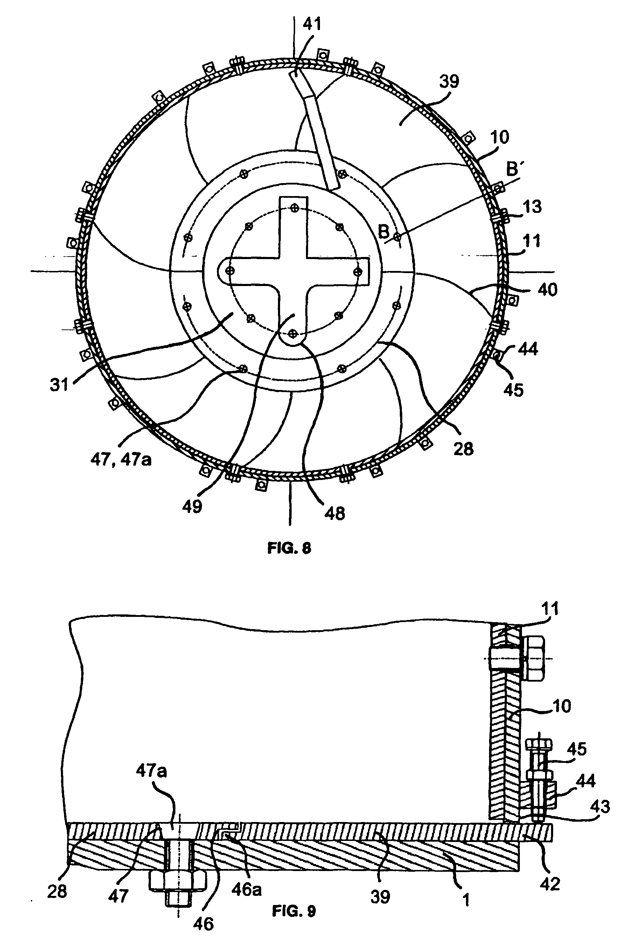

Eine dritte Ausführungsform der Erfindung zeigt Figur 8 in einer Draufsicht und Figur 9 in einer Schnittansicht entlang der Schnittlinie B-B'.

Die Auskleidungshauptteile 39 weisen hier eine kurvenförmig ausgebildete Außenkante 40 auf. Ein besonderer Vorteil dieser Ausführungsform ist, dass die Auskleidungshauptteile nur eine einzige Geometrie aufweisen müssen und das auch bei Segmentwinkeln von < 90°. Zudem wird durch die kurvenförmige Stoßkante die Materialmitnahme des im Mischbehälter befindlichen Mischgutes, insbesondere bei Rotation des Mischbehälters im Uhrzeigersinn unterstützt. Ein weiterer Vorteil dieser Geometrie ist, dass beispielsweise ein radial von außen nach innen laufender fliegend gehaltener Bodenabstreifer 41 nur eine punktförmige und nicht mehr linienförmige Berührung an seiner äußeren Kante mit dem Spalt besitzt, so dass ein Einhaken von eingeklemmten Feststoffpartikeln im Spalt und somit ein erhöhter Verschleiß vermieden wird.

An den radial äußeren Kanten der Auskleidungshauptteile 39 befinden sich Laschen 42, die durch entsprechende Ausnehmungen 43 in der Behälterwand 10 durchgesteckt werden können. Die Unterkante der Wandverschleißbleche 11 ist dabei soweit oberhalb des Mischbehälterbodens angeordnet, dass die Auskleidungshauptteile 39 mit Laschen 42 hindurchgeschoben werden können. Die Auskleidungshauptteile 39 werden dann in vertikaler Richtung durch die Ausnehmung 43 in der Behälterwand 10 gehalten. Es ist auch möglich, wie in Figur 9 gezeigt ist, auf der Außenseite der Behälterwand 10 oberhalb der Ausnehmung 43 eine Spannvorrichtung, z. B. die gezeigte Halterung 44 mit Gewindebohrung vorzusehen, durch die vertikal von oben Schrauben, beispielsweise Druckschrauben 45, zum Niederhalten der Auskleidungshauptteile 39 über die Laschen 42 eingebracht werden können.

Vorteilhaft bei dieser Ausführung ist, dass die Ausnehmung 43 in ihrer vertikalen Ausdehnung großzügiger dimensioniert werden kann und auch bei fertigungsbedingten Schwankungen in der Dicke der hartauftragsgeschweißten Auskleidungshauptteile 39 diese in vertikaler Richtung fest auf der Oberfläche des Behälterbodens niedergehalten werden können.

Das Verschleißelement 28 ist bei dieser Variante kreisringförmig ausgeführt. Je nach Maschinengröße kann dies einteilig oder mehrteilig ausgeführt werden. Das Verschleißelement 28 weist an seiner radial äußeren Kante eine stufenförmige Ausnehmung 46 auf, die mit der korrespondierend ausgeführten stufenförmigen Ausnehmung 46a an der radial innen liegenden Kante des Auskleidungshauptteils 39 überlappt. In dem Verschleißelement 28 sind konische Ausnehmungen 47 auf einem Lochkreis angeordnet, durch die Schrauben mit konischem Schraubenkopf 47a spaltfrei eingesetzt werden und von unterhalb des Mischbehälters lösbar über Muttern mit dem Behälterboden verspannt werden. Durch die Überlappung an der Stoßkante zwischen Verschleißelement 28 und Auskleidungshauptteil 39 wird das Auskleidungshauptteil an der inneren Kante festgehalten. Bei dieser Variante werden im äußeren Bodenbereich des Mischbehälters, d.h. für die Auskleidungshauptteile, überhaupt keine Ausnehmungen zur Befestigung benötigt, so dass hier eine ununterbrochene Verschleißschicht dem Verschleißangriff ausgesetzt ist, und daher deutlich verschleißfester ist. Das Verschleißelement 28 kann zudem je nach geometrischer

Aus gestaltung bei beispielsweise einteiliger Ausführung mit insgesamt nur drei lösbaren Verbindungen mit einem Minimum an Befestigungspunkten auf dem gesamten Umfang befestigt werden.

Die kreisförmige Verschleißschutzauskleidung der Verschlussöffnung besteht aus einem kreisförmigen Auskleidungshauptteil 31, in welches eine kreuzförmige Ausnehmung 48 mit winkligen oder abgerundeten Ecken eingebracht ist, in die ein entsprechendes kreuzförmiges passgenaues Verschleißelement 49 eingelegt und lösbar befestigt wird. Die Bohrungen zur Befestigung des Verschleißetementes 49 befinden sich dabei auf dem gleichen Lochkreis wie die Bohrung zur Befestigung des Auskleidungshauptteils 31.

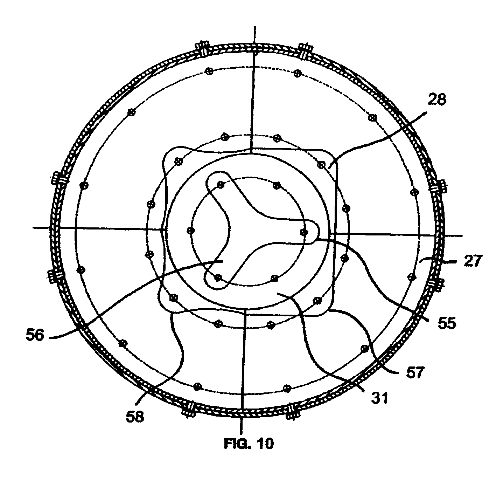

Figur 10 zeigt eine weitere Ausführungsform. Hier hat das Verschleißelement 56 der Verschleißschutzauskleidung des Verschlussdeckels die Form eines 3-flügeligen Bumerangs und wird über drei Befestigungspunkte lösbar mit der Verschließvorrichtung verbunden. Es versteht sich, dass außer der erwähnten lösbaren Verbindung auch eine nicht-lösbare Verbindung, beispielsweise durch Klebung oder punktuelle Verschweißung möglich ist.

Wie ebenfalls in der Figur 10 zu erkennen ist, kann das Verschleißelement 28 der Verschleißschutzauskleidung des Behälterbodens statt quadratisch auch mit abgerundeten Ecken 57 sowie mit bogen- oder kurvenförmig gekrümmten Außenkanten 58 ausgebildet sein. Es versteht sich, dass die Auskleidungshauptteile 27 an ihrer radial innen liegenden Kante entsprechend korrespondierend ausgebildet sein sollten.

Prinzipiell sind der geometrischen Ausgestaltung von sowohl dem äußeren Rand des Verschleißelementes als auch dem radial inneren Rand der Auskleidungshauptteils keine Grenzen gesetzt.

In einer weiteren Ausgestaltung der Erfindung wird die dem Verschleiß ausgesetzte Innenkante der Entleeröffnung in das auf dem Mischbehälterboden aufliegende Verschleißelement integriert, so dass zusätzliche Montagearbeiten zum Austausch des Verstärkungsrings entfallen können. Darüber hinaus kann auch die äußere Kante des Verschleißdeckels der Verschließvorrichtung über eine besondere geometrische Ausgestaltung gegen Verschleißangriff beim Verschließen der Verschleißvorrichtung ausgeführt werden.

### Bezugszeichenliste

- 1: zylindrischer Mischbehälter
- 2: Mischwerkzeug
- 3: zentrale Welle
- 4: Mischflügel
- 5: Wand-/Bodenabstreifer
- 6: Bodenmesser
- 7: Verschleißplatte
- 8: Verschleißdeckel
- 9: Verschließvorrichtung
- 10: Innenwand des Behälters
- 11: gebogene Verschleißflächen
- 12: Gewindebohrungen
- 13: Schrauben
- 14: Entleeröffnung
- 15: Verschlussdeckel
- 16: Lagerzapfen
- 17: Tragarm
- 18: Schwenkwelle
- 19: Gewindebohrungen
- 20: Schrauben
- 21: Drehverbindung
- 22: Maschinenrahmen
- 23: Gewindebohrungen
- 24: Schrauben
- 25: Ausnehmungen
- 26: Bohrungen
- 27: Auskleidungshauptteil
- 28: Verschleißelement
- 29: Bohrungen
- 30: Gewindebohrungen
- 31: Auskleidungshauptteil
- 32: rechteckiger Ausschnitt
- 33: Verschleißelement
- 35: lasergeschnittene Bohrungen
- 36: Ausnehmungen
- 38: Verschleißelement
- 39: Auskleidungshauptteil
- 40: Außenkante
- 41: Bodenabstreifer
- 42: Laschen
- 43: Ausnehmung
- 44: Halterung
- 45: Druckschrauben
- 46: stufenförmige Ausnehmung
- 46a: stufenförmige Ausnehmung
- 47: konische Ausnehmungen
- 47a: konischer Schraubenkopf
- 48: kreuzförmige Ausnehmung
- 49: Verschleißelement
- 50: Punkte
- 51: kreisförmige Ausnehmung
- 52: kreisförmiges Verschleißelement
- 53: Zentrum auf der Oberfläche der Verschließvorrichtung
- 54: Befestigungspunkte
- 56: Verschleißelement
- 57: abgerundete Ecken
- 58: kurvenförmig gekrümmte Außenkanten

## Patentansprüche

1. Mischvorrichtung mit einem um eine Behälterachse drehbaren Behälter zur Aufnahme von Mischgut, in dessen Boden eine Entleeröffnung (14) angeordnet ist, einem im Inneren des Behälters angeordneten Mischwerkzeug (2) und einem Verschlussdeckel zum Verschließen der Entleeröffnung, wobei der Behälterboden und/oder der Verschlussdeckel an der dem Behälterinneren zugewandten Seite mit einer Verschleißschutzauskleidung bestückt ist, wobei die Verschleißschutzauskleidung aus einem Auskleidungshauptteil (27, 31) und einem Verschleißelement (28, 33, 38, 49, 56) besteht, wobei das Verschleißelement (28, 33, 38, 49, 56) näher an der Behälterachse angeordnet ist als das Auskleidungshauptteil (27, 31), **dadurch gekennzeichnet, dass** das Auskleidungshauptteil (27, 31) mindestens zwei, vorzugsweise mindestens drei auf einem Kreis, z.B. einem Lochkreis angeordnete Befestigungselemente, z.B. Befestigungsbohrungen aufweist, das Auskleidungshauptteil (27, 31) eine Ausnehmung zur Aufnahme des Verschleißelementes besitzt, das Verschleißelement (28, 33, 38, 49, 56) mindestens ein vorzugsweise mindestens drei Befestigungselemente, z.B. Befestigungsbohrungen aufweist, wobei die Befestigungselemente des Verschleißelementes bei in die Ausnehmung eingesetzten Verschleißelementes auf dem Kreis angeordnet sind.

2. Mischvorrichtung nach Anspruch 1, **dadurch gekennzeichnet, dass** das Verschleißelement (28, 33, 49, 56) an seiner dem Auskleidungshauptteil (27, 31) zugewandten Seite zumindest abschnittsweise konkav ausgebildet ist, das Auskleidungshauptteil (27, 31) an seiner dem Verschleißelement (28, 33, 49, 56) zugewandten Seite zumindest abschnittsweise konvex ausgebildet ist, wobei der konkave Abschnitt des Verschleißelementes und der konvexe Abschnitt des Auskleidungshauptteils (27, 31) korrespondierend zueinander ausgebildet sind.

3. Mischvorrichtung nach einem der Ansprüche 1 bis 2, **dadurch gekennzeichnet, dass** Auskleidungshauptteil (27) und Verschleißelement (28) an den aneinander zugewandten Kanten zumindest abschnittsweise überlappen, wobei vorzugsweise die Kanten derart ausgebildet sind, das Auskleidungshauptteil (27) und Verschleißelement (28) im wesentlichen bündig aneinander grenzen.

4. Mischvorrichtung nach Anspruch 3, **dadurch gekennzeichnet, dass** die Kanten von Auskleidungshauptteil (27) und Verschleißelement (28) im Überlappbereich derart ausgeführt sind, dass die Kante des Verschleißelementes (28) die Kante des Auskleidungshauptteils (27) überragt, so dass das Auskleidungshauptteil (27) von dem Verschleißelement (28) gehalten wird.

5. Mischvorrichtung nach einem der Ansprüche 1 bis 4, **dadurch gekennzeichnet, dass** der Behälterboden an der dem Behälterinneren zugewandten Seite mit einer Verschleißschutzauskleidung bestückt ist, die aus dem Auskleidungshauptteil und dem Verschleißelement besteht, wobei das Verschleißelement an seiner der Entleeröffnung zugewandten Seite stufig ausgebildet ist, so dass das Verschleißelement zumindest abschnittsweise den inneren Rand der Entleeröffnung abdeckt.

6. Mischvorrichtung nach einem der Ansprüche 1 bis 5, **dadurch gekennzeichnet, dass** der Verschlussdeckel an der dem Behälterinneren zugewandten Seite mit einer Verschleißschutzauskleidung bestückt ist, die aus dem Auskleidungshauptteil und dem Verschleißelement besteht, wobei das Auskleidungshauptteil an seiner dem Verschlussdeckelrand zugewandten Seite stufig ausgebildet ist, so dass das Auskleidungshauptteil zumindest abschnittsweise den Rand des Verschlussdeckels abdeckt.

7. Mischvorrichtung nach einem der Ansprüche 1 bis 6, wobei der Behälterboden an der dem Behälterinneren zugewandten Seite mit einer Verschleißschutzauskleidung bestückt ist, die aus dem Auskleidungshauptteil (27) und dem Verschleißelement (28) besteht und die Behälterwand mit einer Verschleißschutzauskleidung ausgestattet ist, **dadurch gekennzeichnet, dass** die an der Behälterwand angeordnete Verschleißschutzauskleidung nicht bis zum Behälterboden reicht, so dass zumindest abschnittsweise zwischen Verschleißschutzauskleidung der Behälterwand und Behälterboden ein Spalt verbleibt, und dass das Auskleidungshauptteil (27) zumindest teilweise in diesen Spalt hineinragt.

8. Mischvorrichtung nach einem der Ansprüche 1 bis 7, wobei der Behälterboden an der dem Behälterinneren zugewandten Seite mit einer Verschteißschutzauskleidung bestückt ist, die aus dem Auskleidungshauptteil und dem Verschleißelement besteht, **dadurch gekennzeichnet, dass** die Behälterwand mindestens eine Öffnung aufweist und das Auskleidungshauptteil derart ausgebildet ist, dass es durch die Öffnung in der Behälterwand ragt.

9. Mischvorrichtung nach Anspruch 8, **dadurch gekennzeichnet, dass** eine Spannvorrichtung außerhalb des Behälters derart angeordnet ist, dass die Spannvorrichtung mit dem durch die Öffnung in der Behälterwand ragenden Abschnitt des Auskleidungshauptteil in Eingriff treten und das Auskleidungshauptteil auf den Behälterboden pressen kann.

10. Mischvorrichtung nach einem der Ansprüche 1 bis 9, **dadurch gekennzeichnet, dass** das Auskleidungshauptteil (27,) mehrteilig ausgeführt ist, wobei die Teile des Auskleidungshauptteils (27,) in Umfangsrichtung angeordnet sind, wobei vorzugsweise die aneinandergrenzenden Kanten zweier benachbart angeordneter Teile des Auskleidungshauptteil (27,) nicht exakt radial angeordnet sind.

11. Verschleißschutzverkleidung zur Verwendung in einer Mischvorrichtung nach einem der Ansprüche 1 bis 10, **dadurch gekennzeichnet, dass** die Verschleißschutzauskleidung aus mindestens einem Auskleidungshauptteil (27, 31) und mindestens einem Verschleißelement (28, 33, 38, 49, 56) besteht, wobei das Auskleidungshauptteil (27, 31) mindestens zwei, vorzugsweise mindestens drei auf einem Kreis, z.B. einem Lochkreis angeordnete Befestigungselemente, z.B. Befestigungsbohrungen aufweist, das Auskleidungshauptteil (27, 31) eine Ausnehmung zur Aufnahme des Verschleißelementes besitzt, das Verschleißelement (28, 33, 38, 49, 56) mindestens ein vorzugsweise mindestens drei Befestigungselemente, z.B. Befestigungsbohrungen aufweist, wobei die Befestigungselemente des Verschleißelementes bei in die Ausnehmung eingesetzten Verschleißelementes auf dem Kreis angeordnet sind.

12. Verschleißschutzverkleidung nach Anspruch 11, **dadurch gekennzeichnet, dass** das Verschleißelement mehrteilig ausgebildet ist.

## Claims

1. A mixing device comprising a container rotatable about a container axis for receiving material to be mixed, in the bottom of which is arranged a discharge opening (14), a mixing tool (2) arranged in the interior of the container and a closure cover for closing the discharge opening, wherein the container bottom and/or the closure cover is provided with a wear-resistant lining at the side towards the container interior, wherein the wear-resistant lining comprises a main lining portion (27, 31) and a wearing element (28, 33, 38, 49, 56), wherein the wearing element (28, 33, 38, 49, 56) is arranged closer to the container axis than the main lining portion (27, 31) **characterized in that** the main lining portion (27, 31) has at least two, preferably at least three fixing elements, for example fixing holes, arranged on a circle, for example a bolt circle, the main lining portion (27, 31) has an opening for receiving the wearing element, the wearing element (28, 33, 38, 49, 56) has at least one, preferably at least three fixing elements, for example fixing holes, wherein the fixing elements of the wearing element are arranged on the circle when the wearing element is fitted into the opening.

2. A mixing device according to claim 1 **characterized in that** at its side towards the main lining portion (27, 31) the wearing element (28, 33, 49, 56) is of an at least partially concave configuration, at its side towards the wearing element (28, 33, 49, 56) the main lining portion (27, 31) is of an at least partially convex configuration, wherein the concave portion of the wearing element and the convex portion of the main lining portion (27, 31) are of mutually corresponding configuration.

3. A mixing device according to one of claims 1 to 2 **characterized in that** the main lining portion (27) and the wearing portion (28) at least partially overlap at the mutually facing edges, wherein preferably the edges are of such a configuration that the main lining portion (27) and the wearing portion (28) adjoin each other in substantially flush relationship.

4. A mixing device according to claim 3 **characterized in that** the edges of the main lining portion (27) and the wearing element (28) are of such a configuration in the overlap region that the edge of the wearing element (28) projects over the edge of the main lining portion (27) so that the main lining portion (27) is held by the wearing element (28).

5. A mixing device according to one of claims 1 to 4 **characterized in that** at the side towards the container interior the container bottom is provided with a wear-resistant lining comprising the main lining portion and the wearing element, wherein the wearing element is of a stepped configuration at its side towards the discharge opening so that the wearing element at least partially covers over the inner edge of the discharge opening.

6. A mixing device according to one of claims 1 to 5 **characterized in that** at the side towards the container interior the closure cover is provided with a wear-resistant lining comprising the main lining portion and the wearing element, wherein the main lining portion is of a stepped configuration at its side towards the edge of the closure cover so that the main lining portion at least partially covers over the edge of the closure cover.

7. A mixing device according to one of claims 1 to 6 wherein at the side towards the container interior the container bottom is provided with a wear-resistant lining comprising the main lining portion (27) and the wearing element (28) and the container wall is provided with a wear-resistant lining, **characterized in that** the wear-resistant lining on the container wall does not extend to the container bottom so that a gap remains at least partially between the wear-resistant lining of the container wall and the container bottom and the main lining portion (27) projects at least partially into said gap.

8. A mixing device according to one of claims 1 to 7 wherein at the side towards the container interior the container bottom is provided with a wear-resistant lining comprising the main lining portion and the wearing element **characterized in that** the container wall has at least one aperture and the main lining portion is of such a configuration that it projects through the aperture in the container wall.

9. A mixing device according to claim 8 **characterized in that** a clamping device is arranged outside the container in such a way that the clamping device can come into engagement with the portion of the main lining portion, that projects through the aperture in the container wall, and can press the main lining portion on to the container bottom.

10. A mixing device according to one of claims 1 to 9 **characterized in that** the main lining portion (27) is of a multi-part nature, wherein the parts of the main lining portion (27) are arranged in the peripheral direction, wherein the mutually adjoining edges of two adjacently arranged parts of the main lining portion (27) are not arranged exactly radially.

11. A wear-resistant lining for use in a mixing device according to one of claims 1 to 10, **characterized in that** the wear-resistant lining has at least one main lining portion (27, 31) and at least one wearing element (28, 33, 38, 49, 56), wherein the main lining portion (27, 31) comprises at least two, preferably three fixing elements, for example fixing holes, arranged on a circle, for example a bolt circle, the main lining portion (27, 31) has an opening for receiving the wearing element, the wearing element (28, 33, 38, 49, 56) has at least one, preferably at least three fixing elements, for example fixing holes, wherein the fixing elements of the wearing element are arranged on the circle when the wearing element is fitted into the opening.

12. A wear-resistant lining according to claim 11 **characterized in that** the wearing element is of a multi-part nature.

## Revendications

1. Dispositif mélangeur qui comprend un récipient pouvant tourner autour d'un axe du récipient, destiné à contenir un produit à mélanger, et dans le fond duquel est ménagée une ouverture d'évacuation (14), un outil mélangeur (2) disposé à l'intérieur du récipient et un couvercle de fermeture destiné à fermer l'ouverture d'évacuation, le fond du récipient et/ou le couvercle de fermeture étant munis d'un revêtement de protection contre l'usure sur le côté dirigé vers l'intérieur du récipient, le revêtement de protection contre l'usure étant composé d'une partie principale (27, 31) du revêtement et d'un élément d'usure (28, 33, 38, 49, 56), l'élément d'usure (28, 33, 38, 49, 56) étant disposé plus près de l'axe du récipient que la partie principale (27, 31) du revêtement, **caractérisé en ce que** la partie principale (27, 31) du revêtement présente au moins deux, de préférence au moins trois, éléments de fixation, par exemple des perçages de fixation, disposés sur un cercle, par exemple sur un cercle perforé, la partie principale (27, 31) du revêtement présentant un évidement destiné à loger l'élément d'usure, l'élément d'usure (28, 33, 38, 49, 56) présentant au moins un, de préférence au moins trois, élément(s) de fixation, par exemple des perçages de fixation, les éléments de fixation de l'élément d'usure étant disposés sur le cercle lorsque l'élément d'usure est logé dans l'évidement.

2. Dispositif mélangeur selon la revendication 1, **caractérisé en ce que** l'élément d'usure (28, 33, 49, 56) est de conformation concave, au moins en partie, sur son côté dirigé vers la partie principale (27, 31) du revêtement, la partie principale (27, 31) du revêtement est de conformation convexe, au moins en partie, sur son côté dirigé vers l'élément d'usure (28, 33, 49, 56), le segment concave de l'élément d'usure et le segment convexe de la partie principale (27, 31) du revêtement ayant des conformations qui se correspondent mutuellement.

3. Dispositif mélangeur selon l'une des revendications 1 ou 2, **caractérisé en ce que** la partie principale (27) du revêtement et l'élément d'usure (28) se chevauchent au moins par endroits sur leurs chants dirigés l'un vers l'autre, les chants étant de préférence conformés de telle sorte que la partie principale (27) du revêtement et l'élément d'usure (28) butent l'une contre l'autre de façon sensiblement jointive.

4. Dispositif mélangeur selon la revendication 3, **caractérisé en ce que** les chants de la partie principale (27) du revêtement et de l'élément d'usure (28) sont conformés dans la région du chevauchement de telle sorte que le chant de l'élément d'usure (28) empiète sur le chant de la partie principale (27) du revêtement, de sorte que la partie principale (27) du revêtement est tenue par l'élément d'usure (28).

5. Dispositif mélangeur selon l'une des revendications 1 à 4, **caractérisé en ce que** le fond du récipient est muni, sur le côté dirigé vers l'intérieur du récipient, d'un revêtement de protection contre l'usure qui est composé de la partie principale du revêtement et de l'élément d'usure, l'élément d'usure étant conformé en gradins sur son côté dirigé vers l'ouverture d'évacuation, de sorte que l'élément d'usure recouvre au moins par endroits le bord intérieur de l'ouverture d'évacuation.

6. Dispositif mélangeur selon l'une des revendications 1 à 5, **caractérisé en ce que** le couvercle de fermeture est muni, sur le côté dirigé vers l'intérieur du récipient, d'un revêtement de protection contre l'usure qui est composé de la partie principale du revêtement et de l'élément d'usure, la partie principale du revêtement étant conformée en gradins sur son côté dirigé vers le bord du couvercle de fermeture de telle sorte que la partie principale du revêtement recouvre au moins par endroits le bord du couvercle de fermeture.

7. Dispositif mélangeur selon l'une des revendications 1 à 6, dans lequel le fond du récipient est muni, sur le côté dirigé vers l'intérieur du récipient, d'un revêtement de protection contre l'usure qui est composé de la partie principale (27) du revêtement et de l'élément d'usure (28), et la paroi du récipient est munie d'un revêtement de protection contre l'usure, **caractérisé en ce que** le revêtement de protection contre l'usure disposé contre la paroi du récipient ne se prolonge pas jusqu'au fond du récipient, de sorte qu'il subsiste, au moins par endroits, une fente entre le revêtement de protection contre l'usure de la paroi du récipient et le fond du récipient, et de sorte que la partie principale (27) du revêtement est engagée au moins partiellement dans cette fente.

8. Dispositif mélangeur selon l'une des revendications 1 à 7, dans lequel le fond du récipient est muni, sur le côté dirigé vers l'intérieur du récipient, d'un revêtement de protection contre l'usure qui est composé de la partie principale du revêtement et de l'élément d'usure, **caractérisé en ce que** la paroi du récipient présente au moins une ouverture et que la partie principale du revêtement est conformée de telle sorte qu'elle fait saillie à travers l'ouverture de la paroi du récipient.

9. Dispositif mélangeur selon la revendication 8, **caractérisé en ce qu'**un dispositif de serrage est agencé à l'extérieur du récipient de telle sorte que le dispositif de serrage entre en prise avec le segment de la partie principale du revêtement qui fait saillie à travers l'ouverture de de la paroi du récipient et qu'il peut presser la partie principale du revêtement contre le fond du récipient.

10. Dispositif mélangeur selon l'une des revendications 1 à 9, **caractérisé en ce que** la partie principale (27) du revêtement est réalisée en plusieurs pièces, les pièces de la partie principale (27) du revêtement étant disposées dans la direction circonférentielle, les chants mutuellement adjacents de deux pièces de la partie principale (27) du revêtement mutuellement voisines étant de préférence disposés de façon non exactement radiale.

11. Revêtement de protection contre l'usure destiné à être utilisé dans un dispositif mélangeur selon l'une des revendications 1 à 10, **caractérisé en ce que** le revêtement de protection contre l'usure est composé d'au moins une partie principale (27, 31) du revêtement et d'au moins un élément d'usure (28, 33, 38, 49, 56), la partie principale (27, 31) du revêtement présentant au moins deux, de préférence au moins trois, éléments de fixation, par exemple des perçages de fixation, disposés sur un cercle, par exemple sur un cercle perforé, la partie principale (27, 31) du revêtement présentant un évidement destiné à loger l'élément d'usure, l'élément d'usure (28, 33, 38, 49, 56) présentant au moins un, de préférence au moins trois, élément(s) de fixation, par exemple des perçages de fixation, les éléments de fixation de l'élément d'usure étant disposés sur le cercle lorsque l'élément d'usure est logé dans l'évidement.

12. Revêtement de protection contre l'usure selon la revendication 11, **caractérisé en ce que** l'élément d'usure est en plusieurs pièces
